# EUROPEAN PATENT SPECIFICATION

(11) **EP 3 631 362 B1**
(45) Date of publication and mention of the grant of the patent: **06.05.2026**
(21) Application number: 17912109.0
(22) Date of filing: 31.05.2017
(51) Int. Cl.: G01C 21/32, G01C 21/00, G06V 20/56

(54) **METHOD AND APPARATUS FOR CONSTRUCTING AN ENVIRONMENT MODEL**
VERFAHREN UND VORRICHTUNG ZUR KONSTRUKTION EINES UMGEBUNGSMODELLS
PROCÉDÉ ET APPAREIL DE CONSTRUCTION D'UN MODÈLE D'ENVIRONNEMENT

(43) Date of publication of application: 08.04.2020
(73) Proprietor: Bayerische Motoren Werke Aktiengesellschaft, 80809 München (DE)
(72) Inventor: DOEMLING, Maximilian, Shanghai 200020 (CN); JIANG, Wanli, Shanghai 200020 (CN); GRANZOW, Sebastian, Shanghai 200020 (CN); LI, Jianpeng, Shanghai 200020 (CN); XU, Tao, Shanghai 200020 (CN); XU, Hongshan, Shanghai 200020 (CN); LV, Shuhan, Shanghai 200020 (CN)
(86) International application number: PCT/CN2017/086603
(87) International publication number: WO 2018/218506

(56) References cited:
- WO-A1-2015/149043
- WO-A1-2016/201670
- CN-A- 105 849 771
- US-A1- 2017 016 734
- US-A1- 2017 016 734
- US-A1- 2017 115 658

## Description

### FIELD OF THE INVENTION

The present invention relates in general to the field of vehicle or robot, and in more particular, to a method and an apparatus for constructing the environment model for vehicle or robot.

### BACKGROUND

The autonomous driving technology has been researched for many years, and many of the proposed benefits have been demonstrated in varied applications. Many categories of maps have been developed and used in vehicle/robot, such as a point map which consists of laser points, a grid map which separates the environment into a grid with each grid cell recording whether it is occupied by something as well as the probability of the occupancy, a geometric primitive map which uses one or more types of geometric primitives to represent entities in the environment, and a feature map which mainly consists of feature points and their corresponding descriptors extracted from other types of data (e.g., a point cloud, a camera image, etc.), and the Normal distribution transform (NDT) map which uses uni-weighted Gaussian Mixture Model to represent the environment, with each Gaussian distribution modeling a unique grid cell of the environment, a Normal distribution transform Occupancy (NDT-OM) map which separates the environment into grid, within each grid cell of which a Gaussian distribution is calculated among the data points in the cell and a weight which represents the occupancy probability of this cell is maintained for the Gaussian distribution. However, according to the existing technology, a vehicle/robot may only use its own sensor data (received from sensors mounted on the vehicle/robot) to construct the environment model, which is limited to the surrounding region of the vehicle/robot. An example of a vehicle/ robot constructing Signatured Gaussian Mixture Models for map elements within a real-time point cloud or image acquired by the vehicle/robot is provided in WO 2016/201670 A1.

The task of the present invention is to provide a method and a device that can enlarge the range of the environmental model.

The above mentioned task is solved by claim 1, as well as claim 10. Advantageous features are also defined in dependent claims.

### SUMMARY

Embodiments of the present invention provide a method, a device, a system and a vehicle for constructing an environment model, which enable a wide range of the environmental model constructed according to sensor data.

Accordingly, a computer-implemented method for constructing an environment model is provided. The method comprises: generating a first Signatured Gaussian Mixture, SGM, model corresponding to a first part of the environment based on a first sensor data; receiving a second SGM model corresponding to a second part of the environment; and constructing a third SGM model comprising the first SGM model and the second SGM model.

The step "generating a first Signatured Gaussian Mixture Model, SGMM, corresponding to a first part of the environment based on a first sensor data" comprises: obtaining the first sensor data representing a first part of the environment; generating a Gaussian Mixture model for the first part of the environment based on the received sensor data; generating at least one signature for identifying elements in the environment, wherein the signature comprises properties of the elements; and generating the first SGM model for representing the environment, wherein the SGM Model comprises the Gaussian Mixture model of the first part of the environment and the signature.

In a further possible implementation manner, the sensor data is received from: an image recording device, especially video camera and stereo camera; and/or a laser scanner; and/or a radar sensor.

In another further possible implementation manner, the method further comprises: obtaining localization information of the first SGM model.

In another further possible implementation manner, wherein the step "receiving a second SGM model corresponding to a second part of the environment" comprises: obtaining localization information of the second SGM model from the second movable object; and receiving the second SGM model from the second movable object.

In another further possible implementation manner, wherein the step "receiving a second SGM model corresponding to a second part of the environment" further comprises: selecting the second movable object according to the localization information of the first SGM model and the localization information of the second SGM model.

In another further possible implementation manner, the second part of the environment corresponds to the environment of the second movable object.

In another further possible implementation manner, the second SGM model is generated based on a second sensor data from: a further image recording device, especially video camera and stereo camera; and/or a further laser scanner; and/or a further radar sensor.

In another further possible implementation manner, the method further comprises: receiving localization information of the second SGM model from the second movable object.

In another further possible implementation manner, the step "constructing a third SGM model comprising the first SGM model and the second SGM model" comprises: combining the first SGM model and the second SGM model by mapping the first SGM model and the second SGM model according to the localization information of the first SGM model and the localization information of the second SGM model.

According to a further aspect, a data processing device for constructing an environment model is provided. The data processing device comprises a generating module configured to generate a first Signatured Gaussian Mixture, SGM, model corresponding to a first part of the environment based on a first sensor data; a receiving module configured to receive a second SGM model corresponding to a second part of the environment; and a constructing module configured to construct a third SGM model comprising the first SGM model and the second SGM model.

In a possible implementation manner, the generating module is configured: to obtain the first sensor data representing a first part of the environment; to generate a Gaussian Mixture model for the first part of the environment based on the received sensor data; to generate at least one signature for identifying elements in the environment, wherein the signature comprises properties of the elements; and to generate the first SGM model for representing the environment, wherein the SGM Model comprises the Gaussian Mixture model of the first part of the environment and the signature.

In a further possible implementation manner, the data processing device is configured to receive sensor data from: an image recording device, especially video camera and stereo camera; and/or a laser scanner; and/or a radar sensor.

In another further possible implementation manner, the data processing device further comprises a first localization module configured to obtain localization information of the first SGM model.

In another further possible implementation manner, the receiving module is configured: to obtain localization information of the second SGM model from the second movable object; and to receive the second SGM model from the second movable object.

In another further possible implementation manner, the receiving module is configured to select the second movable object according to the localization information of the first SGM model and the localization information of the second SGM model.

In another further possible implementation manner, the data processing device further comprises a second localization module configured to receive localization information of the second SGM model from the second movable object.

In another further possible implementation manner, the constructing module configured to combine the first SGM model and the second SGM model by mapping the first SGM model and the second SGM model according to the localization information of the first SGM model and the localization information of the

According to a further aspect, a system for constructing an environment model is provided. The system comprises a data processing device mentioned above and at least one of: an image recording device, especially video camera and stereo camera; a laser scanner; and a radar sensor.

According to another further aspect, a vehicle or a robot comprising a system mentioned above is provided.

In the embodiments of the present invention, the method or the data processing device for constructing an environment model generates a first Signatured Gaussian Mixture, SGM, model based on its own sensor data and may obtain, from other objects (e.g. vehicles or robots), further SGM model corresponding to a further part of the environment, which generated by the other objects based on their sensor data, and combine the own SGM model with the further SGM model, so that an new SGM model having an enlarged range of the environment can be obtained. Therefore, the environment information detected by different objects can be shared among the vehicles and robots via e.g. internet or any direct connection such as WLAN and Wi-Fi. Thus, the method and the device according to the present invention enable the utilization of SGM model from other vehicle to build own environment model. In addition, since the data size of SGM model is very compact and much smaller than that of the original sensor data, the work load and duration of the data transmission between vehicles can be reduced.

### Brief Description of Drawings

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 shows an example of the use case of the present invention;
FIG. 2, FIG. 3 and FIG. 4 show illustrative diagrams of a portion of a ground truth and several elements obtained by sensors of a vehicle/robot, a point cloud with point clusters, and Signatured Gaussian Mixture, SGM, models for point clusters within the point cloud obtained by representing the point clusters through using the method for representing a map element.
FIG. 5 is a schematic diagram of an embodiment of the method according to the present invention;
FIG. 6 is a schematic diagram of a further embodiment of the method according to the present invention;
FIG. 7 shows a schematic diagram of an embodiment of the data processing device according to the present invention; and
Fig. 8 shows a general hardware environment wherein the present invention is applicable in accordance with an exemplary embodiment of the present invention.

### Description of Embodiments

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

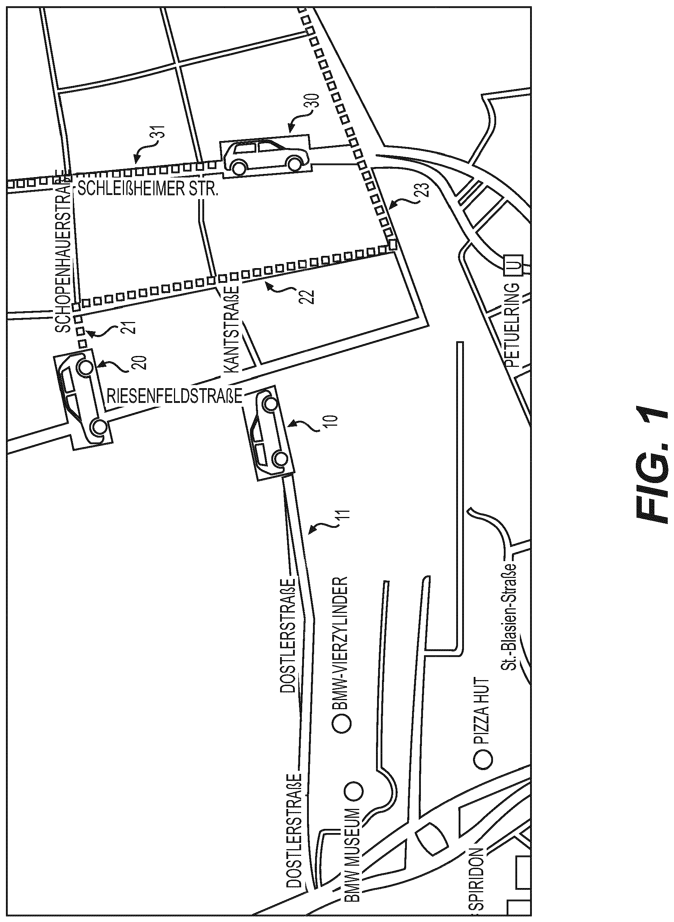

FIG. 1 illustrates a first car 10, a second car 20 and a third car 30 which are driving in a schematic environment. The first car 10 has constructed a first environment model (e.g. SGM model) corresponding to the surrounding region 11 and the road environment that the first car 10 has passed. The second car 20 is driving on a street next to the first car 10 and has constructed a second environment model corresponding to the surrounding regions 21, 22 and 23 that the second car 20 has passed. Similarly, the third car 30 has constructed a third environment model corresponding to the surrounding region 31.

According to the present invention, the first car 10 can receive further environment models from other objects e.g. the cars 20 and 30, and combine the environment model generated based on the sensor data from the sensor mounted on the car 10 with the environment model received from the car 20 and/or the car 30 in order to construct an new environment model presenting an larger area of the environment, in this case an enlarged environment model corresponding to region 11, 21, 22, 23 and 31. In addition, the car 10 can select only one further region from another car. For example, the car 10 can select and receive only the environment model corresponding to the region 22 from the car 20.

The sensors like odometry, GPS, laser scanner, camera (e.g. video camera and stereo camera) etc. are widely used for detecting the environment of the vehicle and for the localization based on matching laser points acquired by the vehicle/robot with e.g. a point cloud map and/or a grid map.

The method for generating a Gaussian Mixture Model for the map element is explained below. As used herein, a map element may be a geometry or point cluster in a digital map or an image segment in an image. The digital map may comprise a digital transportation map or a point cloud map. Alternatively, the map element may be a point cluster in a real-time point cloud or an image segment in an image (such as a camera image) acquired by a vehicle/robot. The digital map may comprise geometric information of the map element or other information which can be used to determine the geometric information of the map element (such as category information thereof). The map element may correspond to a physical object in the physical world.

Moreover, the geometry, point cluster, or image segment may be a shape which can be approximated by geometric primitives alone or in combination. For example, a map element in a digital transportation map may be a geometry in the map which may correspond to a speed limit board in the physical world. The shape of the geometry may approximate to that of a circle primitive as the body of the board and a line segment primitive as the post thereof. As another example, a map element in a point cloud map or a real-time point cloud may be a point cluster which may correspond to a tree along the road in the physical world. The shape of the point cluster may approximate to that of a rectangle primitive as the trunk of the tree and a triangle primitive as the crown of the tree. As another example, the shape of a map element in an image may be an image segment which may correspond to a tree along the road in the physical world. The shape of the image segment may approximate to that of a rectangle primitive as the trunk of the tree and a triangle primitive as the crown of the tree.

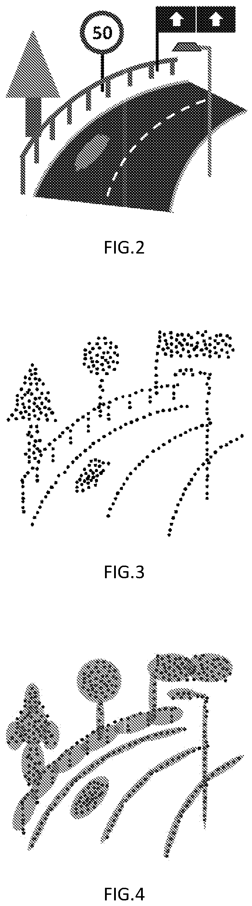

FIG. 2, FIG. 3 and FIG. 4 show illustrative diagrams of a portion of a ground truth and several elements obtained by sensors of a vehicle/robot, a point cloud with point clusters, and Signatured Gaussian Mixture, SGM, models for point clusters within the point cloud obtained by representing the point clusters through using the method for representing a map element, respectively.

Fig. 2 shows a portion of a ground truth with several objects, such as a tree with a crown and a trunk, a speed limit board with a post, a directional board with a post, a road lamp with a post and a holder etc.

Fig. 3 shows a point cloud with several point clusters. The point cloud may be obtained by a vehicle/robot using sensor such as the laser scanner.

Fig. 4 shows an illustrative diagram of representing point clusters in the point cloud. As shown in Fig. 4, point clusters in the point cloud have been represented by Gaussian Mixture Models respectively.

The Gaussian Mixture Model for a point cluster or image segment may be calculated by using the boundary of the point cluster or image segment to generate a quad tree partition of the cluster or segment, and then putting a Gaussian distribution into each blank cell which is located within the point cluster or image segment. As an alternative, the Gaussian Mixture Model for a point cluster may be generated by using points within the point cluster to calculate the Gaussian Mixture Model thereof, for example by using EM method.

Then a signature for identifying the map element may be generated, wherein the signature comprises properties of the map element. For example, the properties of the map element may comprise type, reflectivity or flatness of the map element. In an example, the signature may be constructed as a vector comprising the properties of the map element. It is also contemplated that properties other than those mentioned above can be used to construct the signature. Subsequently, the SGM model for representing the map element may be generated.

It is contemplated that the data required for generating the Gaussian Mixture Model (e.g., data used to compute the specific mean, covariance and composition weight of each Gaussian distribution of the Gaussian Mixture Model, data used to determine the shape of the map element, etc.), the signature and/or existence probability of the map element can be obtained from data sources, such as obtained from digital transportation map or point cloud map suppliers, or obtained by the sensors mounted on the vehicle/robot in real-time. The digital transportation map maybe commercially available maps, such as Google map, HERE map, street view maps, etc. Moreover, the point cloud may be a dense point cloud acquired for example by a LiDAR laser system, or a sparse point cloud acquired for example by one or more laser scanners etc.

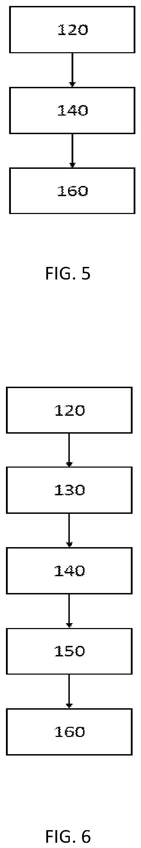

FIG. 5 shows a schematic diagram of an embodiment of the method for constructing an environment model, especially for a vehicle or a robot. The method can be implemented by a data processing device, e.g. a processor with corresponding computer program.

Firstly, according to the step 120, a first Signatured Gaussian Mixture, SGM, model corresponding to a first part of the environment 11 based on a first sensor data can be generated according to the above mentioned method for generating the SGM model.

In order to generate the SGM based on the sensor data in real time, the sensor data corresponding to the environment (e.g. the area 11) is obtained. The environment corresponds to the surrounding area of the vehicle. Then a Gaussian Mixture model for the environment based on the received sensor data can be generated based on the sensor data. Consequently, at least one signature for identifying elements in the environment, wherein the signature comprises properties of the elements is generated. Therefore, the SGM model for representing the environment can be generated, wherein the SGM Model comprises the Gaussian Mixture model of the environment and the signature having properties of the elements in the environment.

The sensor data can be detected by one or more of: an image recording device, especially video camera and stereo camera, and/or a laser scanner, and/or a radar sensor.

In step 140, a further SGM model corresponding to a further area (e.g. 21, 22, 23 and/or 31) is received from the vehicle 20 and/or 30. In order to receive a further SGM model corresponding to a further area from other vehicle, the localization information of the further SGM model of environment areas 21, 22, 23 and/or 31 is obtained from another vehicle 20 and/or 30. In case that the vehicle 10 has found more than one other vehicles, the vehicle 10 may select one or more of the other vehicles according to the localization information of the first SGM model and the localization information of the second SGM model. For example, the vehicle 10 can select both of the vehicles 20 and 30, or only select the vehicle 20 which is nearest to itself, or select the vehicle 30 which has a more useful environment data of the area 31. Subsequently, the second SGM model from the second movable object can be received from the vehicle 20 and/or 30.

The sensor data from other vehicles may also be detected by an image recording device, especially video camera and stereo camera, and/or a laser scanner, and/or a radar sensor.

According to step 160, a new SGM model comprising the both SGM models can be constructed.

In order to construct a new SGM model comprising the both SGM models, the SGM model of generated by the vehicle 10 and the SGM model generated by the vehicle 20 and/or 30 is combined by mapping the both SGM models according to the localization information of the SGM model of generated by the vehicle 10 and the localization information of the SGM model generated by the vehicle 20 and/or 30.

According to the invention, the method for constructing an environment model generates a first SGM model based on its own sensor data and obtains, from other vehicles (or robots) further SGM models corresponding to a further area of the environment, and combine the own SGM model with the further SGM model, so that an new SGM model having an enlarged range of the environment can be obtained.

Thus, the method according to the present invention enable the utilization of SGM model from other vehicle to build an environment model corresponding to the areas of 11, 21, 22, 23 and 31, but not merely the area 11 where the vehicle 10 has passed. The environment model of areas 21, 22, 23 and 31 may be used for localization, as well as real time traffic information for the vehicle 10. Therefore, real time environment information detected by different objects can be shared among the vehicles.

In addition, since the data size of SGM model is very compact and much smaller than that of the original sensor data, the work load and duration of the data transmission between vehicles can be reduced.

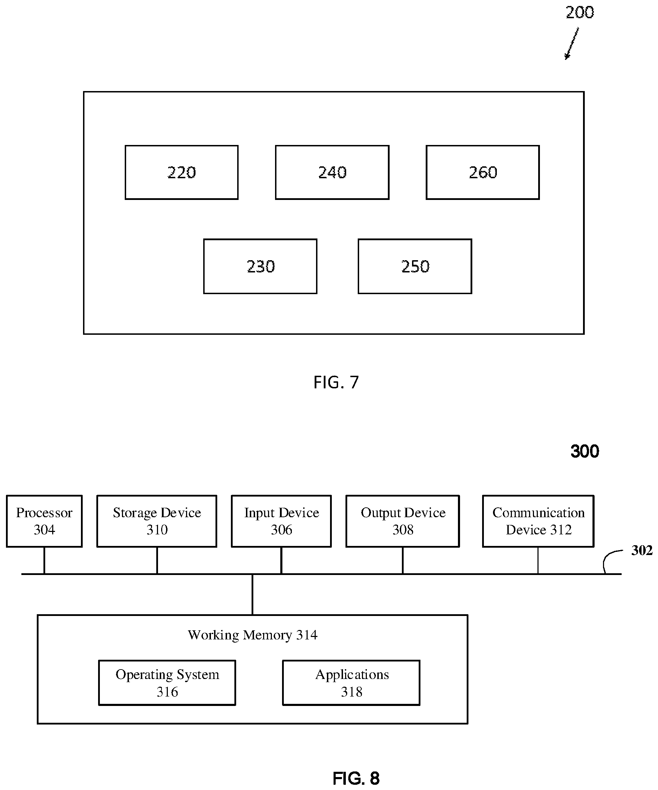

FIG. 6 shows a schematic diagram of an embodiment of the method for constructing an environment model, especially for a vehicle or a robot. The method can be implemented by a data processing device shown in FIG. 7, e.g. a processor with corresponding computer program.

Firstly, according to the step 120, a first Signatured Gaussian Mixture, SGM, model corresponding to a first part of the environment 11 based on a first sensor data can be generated according to the above mentioned method for generating the SGM model.

In order to generate the SGM based on the sensor data in real time, the sensor data corresponding to the environment (e.g. the area 11) is obtained. The environment corresponds to the surrounding area of the vehicle. Then a Gaussian Mixture model for the environment based on the received sensor data can be generated based on the sensor data. Consequently, at least one signature for identifying elements in the environment, wherein the signature comprises properties of the elements is generated. Therefore, the SGM model for representing the environment can be generated, wherein the SGM Model comprises the Gaussian Mixture model of the environment and the signature having properties of the elements in the environment.

Then, in step 130, localization information of the SGM model generated by the vehicle 10 is obtained.

As mentioned afore, in step 140, further SGM models corresponding to a further area (e.g. 21, 22, 23 and/or 31) can be received from the vehicle 20 and/or 30.

In order to receive a further SGM model corresponding to a further area from other vehicle, the localization information of the further SGM model of environment areas 21, 22, 23 and/or 31 is obtained from another vehicle 20 and/or 30. In case that the vehicle 10 has found more than one other vehicles, the vehicle 10 may select one or more of the other vehicles according to the localization information of the first SGM model and the localization information of the second SGM model. For example, the vehicle 10 can select both of the vehicles 20 and 30, or only select the vehicle 20 which is nearest to itself, or select the vehicle 30 which has a more useful environment data of the area 31. Subsequently, the second SGM model from the second movable object can be received from the vehicle 20 and/or 30.

According to step 150, the localization information of further SGM models can be received from the vehicle 20 and/or 30.

In step 160, a new SGM model comprising the both SGM models can be constructed. In order to construct a new SGM model comprising the both SGM models, the SGM model of generated by the vehicle 10 and the SGM model generated by the vehicle 20 and/or 30 is combined by mapping the both SGM models according to the localization information of the SGM model of generated by the vehicle 10 and the localization information of the SGM model generated by the vehicle 20 and/or 30.

FIG. 7 shows a schematic diagram of the data processing device 200 according to the present invention. The data processing device 200 can be implemented in a vehicle or a robot.

The data processing device 200 can implement the above-mentioned method for constructing an environment model. The data processing device comprises a generating module 220 configured to generate a first SGM, model corresponding to a first part of the environment based on a first sensor data, a first localization module 230 configured to obtain localization information of the first SGM model a receiving module 240 configured to receive a second SGM model corresponding to a second part of the environment, a second localization module 250 configured to receive localization information of the second SGM model from the second movable object, and a constructing module 260 configured to construct a third SGM model comprising the first SGM model and the second SGM model.

The generating module 240 is configured to obtain the first sensor data representing a first part of the environment, to generate a Gaussian Mixture model for the first part of the environment based on the received sensor data; to generate at least one signature for identifying elements in the environment, wherein the signature comprises properties of the elements; and to generate the first SGM model for representing the environment, wherein the SGM Model comprises the Gaussian Mixture model of the first part of the environment and the signature.

The receiving module 240 is configured to obtain localization information of the second SGM model from the second movable object; select the second movable object according to the localization information of the first SGM model and the localization information of the second SGM model; and to receive the second SGM model from the second movable object.

Furthermore, the constructing module 260 configured to combine the first SGM model and the second SGM model by mapping the first SGM model and the second SGM model according to the localization information of the first SGM model and the localization information of the second SGM model.

The sensor used in the present invention can be one or more of an image recording device, especially video camera and stereo camera, and a laser scanner, and a radar sensor.

FIG. 8 illustrates a general hardware environment 300 wherein the present invention is applicable in accordance with an exemplary embodiment of the present invention.

With reference to FIG. 8, a computing device 300, which is an example of the hardware device that may be applied to the aspects of the present invention, will now be described. The computing device 300 may be any machine configured to perform processing and/or calculations, may be but is not limited to a work station, a server, a desktop computer, a laptop computer, a tablet computer, a personal data assistant, a smart phone, an on-vehicle computer or any combination thereof. The aforementioned data processing device 200 may be wholly or at least partially implemented by the computing device 300 or a similar device or system.

The computing device 300 may comprise elements that are connected with or in communication with a bus 302, possibly via one or more interfaces. For example, the computing device 300 may comprise the bus 302, and one or more processors 304, one or more input devices 306 and one or more output devices 308. The one or more processors 304 may be any kinds of processors, and may comprise but are not limited to one or more general-purpose processors and/or one or more special-purpose processors (such as special processing chips). The input devices 306 may be any kinds of devices that can input information to the computing device, and may comprise but are not limited to a mouse, a keyboard, a touch screen, a microphone and/or a remote control. The output devices 308 may be any kinds of devices that can present information, and may comprise but are not limited to display, a speaker, a video/audio output terminal, a vibrator and/or a printer. The computing device 300 may also comprise or be connected with non-transitory storage devices 310 which may be any storage devices that are non-transitory and can implement data stores, and may comprise but are not limited to a disk drive, an optical storage device, a solid-state storage, a floppy disk, a flexible disk, hard disk, a magnetic tape or any other magnetic medium, a compact disc or any other optical medium, a ROM (Read Only Memory), a RAM (Random Access Memory), a cache memory and/or any other memory chip or cartridge, and/or any other medium from which a computer may read data, instructions and/or code. The non-transitory storage devices 310 may be detachable from an interface. The non-transitory storage devices 310 may have data/instructions/code for implementing the methods and steps which are described above. The computing device 300 may also comprise a communication device 312. The communication device 312 may be any kinds of device or system that can enable communication with external apparatuses and/or with a network, and may comprise but are not limited to a modem, a network card, an infrared communication device, a wireless communication device and/or a chipset such as a Bluetooth^{™} device, 1302.11 device, WiFi device, WiMax device, cellular communication facilities and/or the like. The first localization module 230, the receiving module 240, and the second localization module 250 as aforementioned may, for example, be implemented by the communication device 312.

When the computing device 300 is used as an on-vehicle device, it may also be connected to external device, for example, a GPS receiver, sensors for sensing different environmental data such as one or more of an image recording device, especially video camera and stereo camera, and a laser scanner, and a radar sensor. In this way, the computing device 300 may, for example, receive location data and sensor data indicating the travelling situation of the vehicle. When the computing device 300 is used as an on-vehicle device, it may also be connected to other facilities (such as an engine system, a wiper, an anti-lock Braking System or the like) for controlling the traveling and operation of the vehicle.

In addition, the non-transitory storage device 310 may have map information and software elements so that the processor 304 may perform route guidance processing. In addition, the output device 306 may comprise a display for displaying the map, the location mark of the vehicle and also images indicating the travelling situation of the vehicle. The output device 306 may also comprise a speaker or interface with an ear phone for audio guidance.

The bus 302 may include but is not limited to Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Particularly, for an on-vehicle device, the bus 302 may also include a Controller Area Network (CAN) bus or other architectures designed for application on an automobile.

The computing device 300 may also comprise a working memory 314, which may be any kind of working memory that may store instructions and/or data useful for the working of the processor 304, and may comprise but is not limited to a random access memory and/or a read-only memory device.

Software elements may be located in the working memory 314, including but are not limited to an operating system 316, one or more application programs 318, drivers and/or other data and codes. Instructions for performing the methods and steps described in the above may be comprised in the one or more application programs 318, and the modules of the aforementioned data processing device 200 may be implemented by the processor 304 reading and executing the instructions of the one or more application programs 318. More specifically, the generating module 220 of the aforementioned device 200 may, for example, be implemented by the processor 304 when executing an application 318 having instructions to perform the step 120. In addition, the constructing module 260 of the aforementioned device 200 may, for example, be implemented by the processor 304 when executing an application 318 having instructions to perform the step 160. Other modules of the aforementioned device 200 may also, for example, be implemented by the processor 304 when executing an application 318 having instructions to perform one or more of the aforementioned respective steps. The executable codes or source codes of the instructions of the software elements may be stored in a non-transitory computer-readable storage medium, such as the storage device(s) 310 described above, and may be read into the working memory 314 possibly with compilation and/or installation. The executable codes or source codes of the instructions of the software elements may also be downloaded from a remote location.

Those skilled in the art may clearly know from the above embodiments that the present invention may be implemented by software with necessary hardware, or by hardware, firmware and the like. Based on such understanding, the embodiments of the present invention may be embodied in part in a software form. The computer software may be stored in a readable storage medium such as a floppy disk, a hard disk, an optical disk or a flash memory of the computer. The computer software comprises a series of instructions to make the computer (e.g., a personal computer, a service station or a network terminal) execute the method or a part thereof according to respective embodiment of the present invention.

In an exemplary embodiment of the present invention, a system is provided which comprises a memory configured to store a series of computer executable instructions and a processor configured to execute the series of computer executable instructions, wherein the series of computer executable instructions, when executed by the processor, cause the processor to perform the steps of each of the aforementioned methods. The system may further comprise one or more sensors configured to obtain sensor data from which the SGM model may be generated and/or sensor data from which the localization information may be obtained. The system may further comprise a display configured to display one or more SGM models. The display here may be any of the existing displays, such as LCD display, LED display, or the like.

In another exemplary embodiment of the present invention, a non-transitory computer readable storage medium is provided which has instructions stored thereon that, when executed by a processor, cause the processor to perform the steps of any of the aforementioned methods.

The present invention being thus described, it will be obvious that the same may be varied in many ways. Such variations are not to be regarded as a departure from the present invention, and all such modifications as would be obvious to those skilled in the art are intended to be included within the scope of the following claims.

## Claims

1. A computer-implemented method for constructing an environment model, comprising:
- generating (120) a first Signatured Gaussian Mixture, SGM, model corresponding to a first part of the environment based on a first sensor data of a first movable object (10);
- receiving (140), from a second movable object (20, 30), a second SGM model corresponding to a second part of the environment, wherein the second SGM model is generated based on a second sensor data of the second movable object (20, 30); and
- constructing (160) a third SGM model comprising the first SGM model and the second SGM model,
wherein the step "generating (120) a first Signatured Gaussian Mixture Model, SGMM, corresponding to a first part of the environment based on a first sensor data of a first movable object (10)" comprises:
- obtaining (122) the first sensor data representing a first part of the environment;
- generating (124) a Gaussian Mixture model for the first part of the environment based on the obtained first sensor data;
- generating (126) at least one signature for identifying elements in the environment, wherein the signature comprises properties of the elements; and
- generating (128) the first SGM model for representing the environment, wherein the first SGM Model comprises the Gaussian Mixture model of the first part of the environment and the signature.

2. Method according to one of claims 1, wherein the first sensor data is received from:
- an image recording device, especially video camera and stereo camera; and/or
- a laser scanner; and/or
- a radar sensor.

3. Method according to one of claims 1 - 2, wherein the method further comprises:
- obtaining (130) localization information of the first SGM model of the first movable object (10).

4. Method according to claim 3, wherein the step "receiving (140), from a second movable object (20, 30), a second SGM model corresponding to a second part of the environment" comprises:
- obtaining (144) localization information of the second SGM model from the second movable object (20, 30); and
- receiving (146) the second SGM model from the second movable object (20, 30).

5. Method according to claim 4, wherein the step "receiving (140), from a second movable object (20, 30), a second SGM model corresponding to a second part of the environment" before the step of "obtaining (144) localization information of the second SGM model from the second movable object (20, 30)" further comprises:
- selecting (142) the second movable object (20, 30) according to the localization information of the first SGM model and the localization information of the second SGM model.

6. Method according to any one of claims 1 - 5, wherein the second part of the environment corresponds to the environment of the second movable object (20, 30).

7. Method according to any one of claims 1 - 6, wherein the second SGM model is generated based on the second sensor data from:
- a further image recording device, especially video camera and stereo camera; and/or
- a further laser scanner; and/or
- a further radar sensor.

8. Method according to any one of claims 1 - 7, wherein the method further comprises:
- receiving (150) localization information of the second SGM model from the second movable object (20, 30).

9. Method according to claim 8, wherein the step "constructing (160) a third SGM model comprising the first SGM model and the second SGM model" comprises:
- combining the first SGM model and the second SGM model by mapping the first SGM model and the second SGM model according to the localization information of the first SGM model and the localization information of the second SGM model.

10. Data processing device for constructing an environment model comprising:
- a generating module (220) configured to generate a first Signatured Gaussian Mixture, SGM, model corresponding to a first part of the environment based on a first sensor data of a first movable object (10);
- a receiving module (240) configured to receive, from a second movable object (20, 30), a second SGM model corresponding to a second part of the environment, wherein the second SGM model is generated based on a second sensor data of the second movable object (20, 30); and
- a constructing module (260) configured to construct a third SGM model comprising the first SGM model and the second SGM model,
wherein the generating module (240) is configured:
- to obtain the first sensor data representing a first part of the environment;
- to generate a Gaussian Mixture model for the first part of the environment based on the obtained first sensor data;
- to generate at least one signature for identifying elements in the environment, wherein the signature comprises properties of the elements; and
- to generate the first SGM model for representing the environment, wherein the first SGM Model comprises the Gaussian Mixture model of the first part of the environment and the signature.

11. Data processing device according to claim 10, wherein the data processing device is configured to receive the first sensor data from:
- an image recording device, especially video camera and stereo camera; and/or
- a laser scanner; and/or
- a radar sensor.

12. Data processing device according to one of claims 10 - 11, wherein the data processing device further comprises a first localization module (230) configured to obtain localization information of the first SGM model of a first movable object (10).

13. Data processing device according to claim 12, wherein the receiving module (240) is configured:
- to obtain localization information of the second SGM model from the second movable object (20, 30); and
- to receive the second SGM model from the second movable object (20, 30).

14. Data processing device according to claim 13, wherein the receiving module (240) is further configured to select the second movable object (20, 30) according to the localization information of the first SGM model and the localization information of the second SGM model.

15. Data processing device according to any one of claims 10 - 14, wherein the data processing device further comprises a second localization module (250) configured to receive localization information of the second SGM model from the second movable object (20, 30).

16. Data processing device according to any one of claims 10 - 15, wherein the constructing module (260) configured to combine the first SGM model and the second SGM model by mapping the first SGM model and the second SGM model according to the localization information of the first SGM model and the localization information of the second SGM model.

17. System for constructing an environment model comprising a data processing device according to any one of claims 10 - 16 and at least one of:
- an image recording device, especially video camera and stereo camera;
- a laser scanner; and
- a radar sensor.

18. Vehicle or robot comprising a system according to claim 17.

## Patentansprüche

1. Computerimplementiertes Verfahren zum Konstruieren eines Umgebungsmodells, umfassend:
• Erzeugen (120) eines ersten Signatured Gaussian Mixture, SGM, Modells entsprechend einem ersten Teil der Umgebung basierend auf ersten Sensordaten eines ersten bewegbaren Objekts (10);
• Empfangen (140), von einem zweiten bewegbaren Objekt (20, 30), eines zweiten SGM-Modells entsprechend einem zweiten Teil der Umgebung, wobei das zweite SGM-Modell basierend auf zweiten Sensordaten des zweiten bewegbaren Objekts (20, 30) erzeugt ist; und
• Konstruieren (160) eines dritten SGM-Modells umfassend das erste SGM-Modell und das zweite SGM-Modell,
wobei der Schritt "Erzeugen (120) eines ersten Signatured Gaussian Mixture Modells, SGMM, entsprechend einem ersten Teil der Umgebung basierend auf ersten Sensordaten eines ersten bewegbaren Objekts (10)" umfasst:
• Erhalten (122) der ersten Sensordaten, die einen ersten Teil der Umgebung repräsentieren;
• Erzeugen (124) eines Gaussian Mixture Modells für den ersten Teil der Umgebung basierend auf den erhaltenen ersten Sensordaten;
• Erzeugen (126) mindestens einer Signatur zum Identifizieren von Elementen in der Umgebung, wobei die Signatur Eigenschaften der Elemente umfasst; und
• Erzeugen (128) des ersten SGM-Modells zum Repräsentieren der Umgebung, wobei das erste SGM-Modell das Gaussian Mixture Modell des ersten Teils der Umgebung und die Signatur umfasst.

2. Verfahren nach einem der Ansprüche 1, wobei die ersten Sensordaten empfangen werden von:
• einer Bildaufnahmevorrichtung, insbesondere Videokamera und Stereokamera; und/oder
• einem Laserscanner; und/oder
• einem Radarsensor.

3. Verfahren nach einem der Ansprüche 1 - 2, wobei das Verfahren ferner umfasst:
• Erhalten (130) von Lokalisierungsinformationen des ersten SGM-Modells des ersten bewegbaren Objekts (10).

4. Verfahren nach Anspruch 3, wobei der Schritt "Empfangen (140), von einem zweiten bewegbaren Objekt (20, 30), eines zweiten SGM-Modells entsprechend einem zweiten Teil der Umgebung" umfasst:
• Erhalten (144) von Lokalisierungsinformationen des zweiten SGM-Modells von dem zweiten bewegbaren Objekt (20, 30); und
• Empfangen (146) des zweiten SGM-Modells von dem zweiten bewegbaren Objekt (20, 30).

5. Verfahren nach Anspruch 4, wobei der Schritt "Empfangen (140), von einem zweiten bewegbaren Objekt (20, 30), eines zweiten SGM-Modells entsprechend einem zweiten Teil der Umgebung" vor dem Schritt des "Erhaltens (144) von Lokalisierungsinformationen des zweiten SGM-Modells von dem zweiten bewegbaren Objekt (20, 30)" ferner umfasst:
• Auswählen (142) des zweiten bewegbaren Objekts (20, 30) gemäß den Lokalisierungsinformationen des ersten SGM-Modells und den Lokalisierungsinformationen des zweiten SGM-Modells.

6. Verfahren nach einem der Ansprüche 1 - 5, wobei der zweite Teil der Umgebung der Umgebung des zweiten bewegbaren Objekts (20, 30) entspricht.

7. Verfahren nach einem der Ansprüche 1 - 6, wobei das zweite SGM-Modell erzeugt ist basierend auf den zweiten Sensordaten von:
• einer weiteren Bildaufnahmevorrichtung, insbesondere Videokamera und Stereokamera; und/oder
• einem weiteren Laserscanner; und/oder
• einem weiteren Radarsensor.

8. Verfahren nach einem der Ansprüche 1 - 7, wobei das Verfahren ferner umfasst:
• Empfangen (150) von Lokalisierungsinformationen des zweiten SGM-Modells von dem zweiten bewegbaren Objekt (20, 30).

9. Verfahren nach Anspruch 8, wobei der Schritt "Konstruieren (160) eines dritten SGM-Modells umfassend das erste SGM-Modell und das zweite SGM-Modell" umfasst:
• Kombinieren des ersten SGM-Modells und des zweiten SGM-Modells durch Abbilden des ersten SGM-Modells und des zweiten SGM-Modells gemäß den Lokalisierungsinformationen des ersten SGM-Modells und den Lokalisierungsinformationen des zweiten SGM-Modells.

10. Datenverarbeitungsvorrichtung zum Konstruieren eines Umgebungsmodells umfassend:
• ein Erzeugungsmodul (220), das konfiguriert ist, ein erstes Signatured Gaussian Mixture, SGM, Modell entsprechend einem ersten Teil der Umgebung basierend auf ersten Sensordaten eines ersten bewegbaren Objekts (10) zu erzeugen;
• ein Empfangsmodul (240), das konfiguriert ist, von einem zweiten bewegbaren Objekt (20, 30) ein zweites SGM-Modell entsprechend einem zweiten Teil der Umgebung zu empfangen, wobei das zweite SGM-Modell basierend auf zweiten Sensordaten des zweiten bewegbaren Objekts (20, 30) erzeugt ist; und
• ein Konstruktionsmodul (260), das konfiguriert ist, ein drittes SGM-Modell umfassend das erste SGM-Modell und das zweite SGM-Modell zu konstruieren,
wobei das Erzeugungsmodul (240) konfiguriert ist:
• die ersten Sensordaten, die einen ersten Teil der Umgebung repräsentieren, zu erhalten;
• ein Gaussian Mixture Modell für den ersten Teil der Umgebung basierend auf den erhaltenen ersten Sensordaten zu erzeugen;
• mindestens eine Signatur zum Identifizieren von Elementen in der Umgebung zu erzeugen, wobei die Signatur Eigenschaften der Elemente umfasst; und
• das erste SGM-Modell zum Repräsentieren der Umgebung zu erzeugen, wobei das erste SGM-Modell das Gaussian Mixture Modell des ersten Teils der Umgebung und die Signatur umfasst.

11. Datenverarbeitungsvorrichtung nach Anspruch 10, wobei die Datenverarbeitungsvorrichtung konfiguriert ist, die ersten Sensordaten zu empfangen von:
• einer Bildaufnahmevorrichtung, insbesondere Videokamera und Stereokamera;
und/oder
• einem Laserscanner; und/oder
• einem Radarsensor.

12. Datenverarbeitungsvorrichtung nach einem der Ansprüche 10 - 11, wobei die Datenverarbeitungsvorrichtung ferner ein erstes Lokalisierungsmodul (230) umfasst, das konfiguriert ist, Lokalisierungsinformationen des ersten SGM-Modells eines ersten bewegbaren Objekts (10) zu erhalten.

13. Datenverarbeitungsvorrichtung nach Anspruch 12, wobei das Empfangsmodul (240) konfiguriert ist:
• Lokalisierungsinformationen des zweiten SGM-Modells von dem zweiten bewegbaren Objekt (20, 30) zu erhalten; und
• das zweite SGM-Modell von dem zweiten bewegbaren Objekt (20, 30) zu empfangen.

14. Datenverarbeitungsvorrichtung nach Anspruch 13, wobei das Empfangsmodul (240) ferner konfiguriert ist, das zweite bewegbare Objekt (20, 30) gemäß den Lokalisierungsinformationen des ersten SGM-Modells und den Lokalisierungsinformationen des zweiten SGM-Modells auszuwählen.

15. Datenverarbeitungsvorrichtung nach einem der Ansprüche 10 - 14, wobei die Datenverarbeitungsvorrichtung ferner ein zweites Lokalisierungsmodul (250) umfasst, das konfiguriert ist, Lokalisierungsinformationen des zweiten SGM-Modells von dem zweiten bewegbaren Objekt (20, 30) zu empfangen.

16. Datenverarbeitungsvorrichtung nach einem der Ansprüche 10 - 15, wobei das Konstruktionsmodul (260) konfiguriert ist, das erste SGM-Modell und das zweite SGM-Modell zu kombinieren durch Abbilden des ersten SGM-Modells und des zweiten SGM-Modells gemäß den Lokalisierungsinformationen des ersten SGM-Modells und den Lokalisierungsinformationen des zweiten SGM-Modells.

17. System zum Konstruieren eines Umgebungsmodells umfassend eine Datenverarbeitungsvorrichtung nach einem der Ansprüche 10 - 16 und mindestens eines von:
• einer Bildaufnahmevorrichtung, insbesondere Videokamera und Stereokamera;
• einem Laserscanner; und
• einem Radarsensor.

18. Fahrzeug oder Roboter umfassend ein System nach Anspruch 17.

## Revendications

1. Procédé mis en œuvre par ordinateur pour construire un modèle d'environnement, comprenant :
• la génération (120) d'un premier modèle Signatured Gaussian Mixture, SGM, correspondant à une première partie de l'environnement sur la base de premières données de capteur d'un premier objet mobile (10) ;
• la réception (140), en provenance d'un deuxième objet mobile (20, 30), d'un deuxième modèle SGM correspondant à une deuxième partie de l'environnement, dans lequel le deuxième modèle SGM est généré sur la base de deuxièmes données de capteur du deuxième objet mobile (20, 30) ; et
• la construction (160) d'un troisième modèle SGM comprenant le premier modèle SGM et le deuxième modèle SGM,
dans lequel l'étape « génération (120) d'un premier modèle Signatured Gaussian Mixture Model, SGMM, correspondant à une première partie de l'environnement sur la base de premières données de capteur d'un premier objet mobile (10) » comprend :
• l'obtention (122) des premières données de capteur représentant une première partie de l'environnement ;
• la génération (124) d'un modèle Gaussian Mixture pour la première partie de l'environnement sur la base des premières données de capteur obtenues ;
• la génération (126) d'au moins une signature pour identifier des éléments dans l'environnement, dans laquelle la signature comprend des propriétés des éléments ; et
• la génération (128) du premier modèle SGM pour représenter l'environnement, dans lequel le premier modèle SGM comprend le modèle Gaussian Mixture de la première partie de l'environnement et la signature.

2. Procédé selon l'une des revendications 1, dans lequel les premières données de capteur sont reçues de :
• un dispositif d'enregistrement d'images, en particulier caméra vidéo et caméra stéréo
; et/ou
• un scanner laser ; et/ou
• un capteur radar.

3. Procédé selon l'une des revendications 1 - 2, dans lequel le procédé comprend en outre :
• l'obtention (130) d'informations de localisation du premier modèle SGM du premier objet mobile (10).

4. Procédé selon la revendication 3, dans lequel l'étape « réception (140), en provenance d'un deuxième objet mobile (20, 30), d'un deuxième modèle SGM correspondant à une deuxième partie de l'environnement » comprend :
• l'obtention (144) d'informations de localisation du deuxième modèle SGM en provenance du deuxième objet mobile (20, 30) ; et
• la réception (146) du deuxième modèle SGM en provenance du deuxième objet mobile (20, 30).

5. Procédé selon la revendication 4, dans lequel l'étape « réception (140), en provenance d'un deuxième objet mobile (20, 30), d'un deuxième modèle SGM correspondant à une deuxième partie de l'environnement » avant l'étape d'« obtention (144) d'informations de localisation du deuxième modèle SGM en provenance du deuxième objet mobile (20, 30) » comprend en outre :
• la sélection (142) du deuxième objet mobile (20, 30) selon les informations de localisation du premier modèle SGM et les informations de localisation du deuxième modèle SGM.

6. Procédé selon l'une quelconque des revendications 1 - 5, dans lequel la deuxième partie de l'environnement correspond à l'environnement du deuxième objet mobile (20, 30).

7. Procédé selon l'une quelconque des revendications 1 - 6, dans lequel le deuxième modèle SGM est généré sur la base des deuxièmes données de capteur de :
• un autre dispositif d'enregistrement d'images, en particulier caméra vidéo et caméra stéréo ; et/ou
• un autre scanner laser ; et/ou
• un autre capteur radar.

8. Procédé selon l'une quelconque des revendications 1 - 7, dans lequel le procédé comprend en outre :
• la réception (150) d'informations de localisation du deuxième modèle SGM en provenance du deuxième objet mobile (20, 30).

9. Procédé selon la revendication 8, dans lequel l'étape « construction (160) d'un troisième modèle SGM comprenant le premier modèle SGM et le deuxième modèle SGM » comprend :
• la combinaison du premier modèle SGM et du deuxième modèle SGM par mise en correspondance du premier modèle SGM et du deuxième modèle SGM selon les informations de localisation du premier modèle SGM et les informations de localisation du deuxième modèle SGM.

10. Dispositif de traitement de données pour construire un modèle d'environnement comprenant :
• un module de génération (220) configuré pour générer un premier modèle Signatured Gaussian Mixture, SGM, correspondant à une première partie de l'environnement sur la base de premières données de capteur d'un premier objet mobile (10) ;
• un module de réception (240) configuré pour recevoir, en provenance d'un deuxième objet mobile (20, 30), un deuxième modèle SGM correspondant à une deuxième partie de l'environnement, dans lequel le deuxième modèle SGM est généré sur la base de deuxièmes données de capteur du deuxième objet mobile (20, 30) ; et
• un module de construction (260) configuré pour construire un troisième modèle SGM comprenant le premier modèle SGM et le deuxième modèle SGM,
dans lequel le module de génération (240) est configuré :
• pour obtenir les premières données de capteur représentant une première partie de l'environnement ;
• pour générer un modèle Gaussian Mixture pour la première partie de l'environnement sur la base des premières données de capteur obtenues ;
• pour générer au moins une signature pour identifier des éléments dans l'environnement, dans laquelle la signature comprend des propriétés des éléments ; et
• pour générer le premier modèle SGM pour représenter l'environnement, dans lequel le premier modèle SGM comprend le modèle Gaussian Mixture de la première partie de l'environnement et la signature.

11. Dispositif de traitement de données selon la revendication 10, dans lequel le dispositif de traitement de données est configuré pour recevoir les premières données de capteur de :
• un dispositif d'enregistrement d'images, en particulier caméra vidéo et caméra stéréo ; et/ou
• un scanner laser ; et/ou
• un capteur radar.

12. Dispositif de traitement de données selon l'une des revendications 10 - 11, dans lequel le dispositif de traitement de données comprend en outre un premier module de localisation (230) configuré pour obtenir des informations de localisation du premier modèle SGM d'un premier objet mobile (10).

13. Dispositif de traitement de données selon la revendication 12, dans lequel le module de réception (240) est configuré :
• pour obtenir des informations de localisation du deuxième modèle SGM en provenance du deuxième objet mobile (20, 30) ; et
• pour recevoir le deuxième modèle SGM en provenance du deuxième objet mobile (20, 30).

14. Dispositif de traitement de données selon la revendication 13, dans lequel le module de réception (240) est en outre configuré pour sélectionner le deuxième objet mobile (20, 30) selon les informations de localisation du premier modèle SGM et les informations de localisation du deuxième modèle SGM.

15. Dispositif de traitement de données selon l'une quelconque des revendications 10 - 14, dans lequel le dispositif de traitement de données comprend en outre un deuxième module de localisation (250) configuré pour recevoir des informations de localisation du deuxième modèle SGM en provenance du deuxième objet mobile (20, 30).

16. Dispositif de traitement de données selon l'une quelconque des revendications 10 - 15, dans lequel le module de construction (260) est configuré pour combiner le premier modèle SGM et le deuxième modèle SGM par mise en correspondance du premier modèle SGM et du deuxième modèle SGM selon les informations de localisation du premier modèle SGM et les informations de localisation du deuxième modèle SGM.

17. Système pour construire un modèle d'environnement comprenant un dispositif de traitement de données selon l'une quelconque des revendications 10 - 16 et au moins un parmi :
• un dispositif d'enregistrement d'images, en particulier caméra vidéo et caméra stéréo
• un scanner laser ; et
• un capteur radar.

18. Véhicule ou robot comprenant un système selon la revendication 17.
